(19) Europäisches Patentamt
European Patent Office
Office européen des brevets

(11) Veröffentlichungsnummer : **0 033 827**
**B1**

(12) # EUROPÄISCHE PATENTSCHRIFT

(45) Veröffentlichungstag der Patentschrift : **11.05.83**

(51) Int. Cl.³ : **C 07 F 9/40**

(21) Anmeldenummer : **81100032.2**

(22) Anmeldetag : **07.01.81**

(54) **Verfahren zur Herstellung von Fluorsulfonylbenzylphosphonsäureestern und neue Fluorsulfonylbenzylphosphonsäureester.**

(30) Priorität : **19.01.80 DE 3001896**

(43) Veröffentlichungstag der Anmeldung : **19.08.81 Patentblatt 81/33**

(45) Bekanntmachung des Hinweises auf die Patenterteilung : **11.05.83 Patentblatt 83/19**

(84) Benannte Vertragsstaaten : **CH DE FR GB IT LI**

(56) Entgegenhaltungen :
**FR A 2 441 337**
**US A 3 338 948**
**HOUBEN-WEYL « Methoden der Organischen Chemie » 4. Auflage, Band XII/2, Teil 2, 1964, GEORG THIEME VERLAG ; Stuttgart**

(73) Patentinhaber : **BAYER AG**
**Zentralbereich Patente, Marken und Lizenzen**
**D-5090 Leverkusen 1, Bayerwerk (DE)**

(72) Erfinder : **Schellhammer, Carl-Wolfgang, Dr.**
**Katharinenthal 26**
**D-5060 Bergisch-Gladbach 2 (DE)**
Erfinder : **Klauke, Erich, Dr.**
**Eichendorffweg 8**
**D-5068 Odenthal (DE)**

**EP 0 033 827 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Verfahren zur Herstellung von Fluorsulfonylbenzyl-phosphonsäureestern und neue Fluorsulfonylbenzylphosphonsäureester

Gegenstand der Erfindung ist ein Verfahren zur Herstellung von Verbindungen der Formel

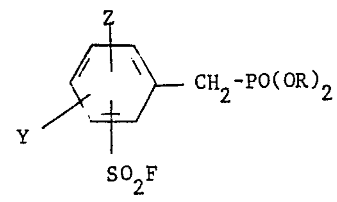

(I)

worin

Y Wasserstoff, Halogen, Nitro, $CF_3$, Alkyl, Cycloalkyl, Aralkyl, Aryl, Hetaryl, Acyl, Acylamino oder $SO_2F$,
Z Wasserstoff, Alkyl, Halogen oder — gemeinsam mit Y — einen annellierten carbo- oder heterocyclischen aromatischen Rest und
R Alkyl bedeuten.

Das Verfahren ist dadurch gekennzeichnet, daß man Verbindungen der Formel

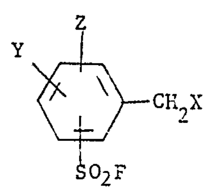

(II)

worin X für Halogen steht,

mit Phosphiten der Formel

$$P(OR)_3 \qquad (III)$$

umsetzt.

Geeignete Halogenatome sind F, Cl oder Br. Geeignete Alkylreste sind solche mit 1-4 C-Atomen ; im Falle von R sind Methyl und Ethyl bevorzugt. Geeignete Cycloalkylreste sind Cyclohexylreste.

Geeignete Arylreste sind Phenylreste, die vorzugsweise 1- bis 3-fach durch $C_1$-$C_4$-Alkyl, $C_1$-$C_4$-Alkoxy oder Halogen substituiert sein können.

Geeignete Aralkylreste sind Benzyl und Phenylethyl. Geeignete Hetarylreste sind Pyrazol-, Triazol- oder Imidazolreste, die C- oder N-verknüpft sein können.

Geeignete Acylreste sind COR′ und $SO_2R'$, wobei R′ für Alkyl oder Aryl steht. Beispiele für ankondensierte Aromaten sind :

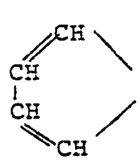

oder

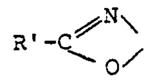

oder

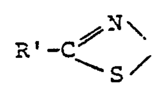

« Sperrige » Reste befinden sich in solchen Positionen, wo sie keine sterische Hinderung bewirken.

Die Selektivität der erfindungsgemäßen Reaktion ist als ausgesprochen überraschend anzusehen, da in entsprechenden Sulfochloriden die Sulfochloridgruppe mit den Phosphiten reagiert (vgl. J. Am. Chem. Soc. *78*, 6 413 (1956) und Houben-Weyl, 4. Aufl. (1964), Bd. XII/2, S. 575, 679).

Die Umsetzung von (II) mit (III) erfolgt in an sich bekannter Weise nach Art einer Michaelis-Arbusov-Reaktion (vgl. Houben-Weyl, 4. Aufl. (1963), Bd. XII/1, S. 433 ff) durch Erhitzen mindestens äquimolarer Mengen auf 110-180 °C gegebenenfalls in Anwesenheit eines inerten Lösungsmittels, wie Xylol, Dichlorbenzol, Tetralin. Vorzugsweise arbeitet man in überschüssigem Phosphit als Lösungsmittel. Den Verlauf der Reaktion kann man z. B. durch Messung der abgespaltenen Menge an R-X verfolgen. Die Reaktionszeiten betragen im allgemeinen 3-20 Stunden.

Die Aufarbeitung des Reaktionsgemisches erfolgt in üblicher Weise, z. B. durch Destillation oder Umlösen des Rückstands im Reaktionsgefäß.

Die Verbindungen der Formel (II) sind bekannt bzw. nach an sich bekannten Methode zugänglich. Man erhält sie z. B. durch Seitenkettenhalogenierung von Verbindungen der Formel

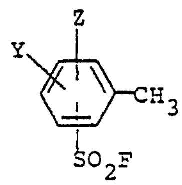

mit elementarem Chlor oder N-Bromsuccinimid (vgl. J. Chem. Soc. 1932, 2 042 und J. Med. Chem. *12*, 906 (1969)). Auch die Phosphite der Formel (III) sind literaturbekannt.

Verbindungen der Formel (IV)

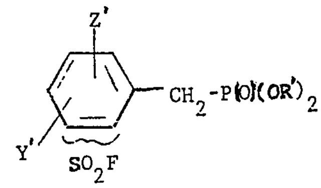

worin

Y' Wasserstoff, F, Cl, Br, $CF_3$, $CH_3$, tert.-Butyl, Acetylamino, Benzoylamino, Methylsulfonyl, Phenylsulfonyl, 1,2,4-Triazolyl-1 oder Pyrazolyl-1,

Z' Wasserstoff, Cl, $CH_3$ und

R' Methyl oder Ethyl bedeuten und sich der Fluorsulfonylrest in o- oder m-Stellung zu dem Rest —$CH_2PO(OR)_2$ befindet, sind neu und ebenfalls Gegenstand der vorliegenden Erfindung.

Es handelt sich dabei um farblose Flüssigkeiten oder Feststoffe, die unbeschränkt haltbar sind. Sie sind wertvolle Zwischenprodukte zur Herstellung von optischen Aufhellern vom Stilbentyp, die in an sich bekannter Weise durch Kondensation mit entsprechenden aromatischen Aldehyden erhalten werden (vgl. DE-PS 794 386). Darüber hinaus eignen sich die erfindungsgemäßen Stoffe als Ausgangsmaterialien zur Herstellung von Sulfonylhydraziden, die wiederum als Blähmittel für Kunststoffmischunen Verwendung finden (vgl. US-PS 3 730 921).

Die nachfolgenden Drücke sind in mbar angegeben.

## Beispiel 1

76,1 g 4-Chlor-2-fluorsulfonylbenzylchlorid ($Kp_{20}$=146 °C, $n_D^{20}$ = 1,546 5) werden in 10 Minuten zu 78,1 g Triethylphosphit, das auf 120-150 °C erhitzt ist, getropft. Die Mischung wird bei einer Badtemperatur von 180 °C 5 Stunden gerührt, dann haben sich 4,5 l. Chlorethan abgespalten. Man destilliert den überschüssigen Phosphorigsäuretriethylester an der Wasserstrahlpumpe ab und fraktioniert den Rückstand an der Ölpumpe. $Kp_{0,13}$ = 148-160 °C ; Ausb. 89 g 4-Chlor-2-fluorsulfonylbenzylphosphonsäurediethylester (Gehalt nach GC 96,9 %). Die Ausbeute beträgt 79,9 % d. Th.

Folgende Umsetzungen werden analog durchgeführt : 4-Trifluormethyl-2-fluorsulfonylbenzylchlorid ($Kp_{20}$ = 122°, $n_D^{20}$ = 1,474 5) → 4-Trifluormethyl-2-fluorsulfonylbenzylphosphonsäurediethylester, $Kp_{0,13-0,1}$ = 133-124° ; Ausb. 54,4 % d. Th. an 67 %igem Produkt.

2-Fluorsulfonylbenzylchlorid → 2-Fluorsulfonylbenzylphosphonsäurediethylester, $Kp_{0,13-0,1}$ = 135-140°, $n_D^{20}$ = 1,494 8. Ausb. 76,5 % d. Th. an 72,6 %igem Produkt.

4-Fluorsulfonylbenzylchlorid → 4-Fluorsulfonylbenzylphosphonsäurediethylester, $Kp_{0,13}$ = 137-153°, $n_D^{20}$ = 1,495 8 ; Ausb. 86 % d. Th. an 94,4 %igem Material.

3-Trifluormethyl-4-fluorsulfonylbenzylchlorid ($Kp_{20}$ = 122°, $n_D^{20}$ = 1,474 2) → 3-Trifluormethyl-4-fluorsulfonylbenzylphosphonsäurediethylester, $Kp_{0,13}$ = 130-140° ; Ausb. 86,8 % d. Th. an 98,8 %igem Material.

4-Fluorsulfonyl-2-trifluormethylbenzylchlorid ($Kp_{27}$ = 129°, $n_D^{20}$ = 1,480 9) → 4-Fluorsulfonyl-2-trifluormethylbenzylphosphonsäurediethylester, $Kp_{0,13}$ = 130-137°, F. 42-45°, farblose Kristalle. Ausb. 85 % d. Th. an 96 %igem Material.

## Beispiel 2

Eine Mischung aus 118 g o-Fluorsulfonylbenzylchlorid und 105,5 g Trimethylphosphit wird 4

Stunden in einem 180° warmen Ölbad verrührt ; dabei werden 11,4 ltr. Chlormethan abgespalten. Man destilliert dann das überschüssige Trimethylphosphit an der Wasserstrahlpumpe ab und fraktioniert den Rückstand an der Ölpumpe. Der o-Fluorsulfonylbenzylphosphonsäuredimethylester siedet bei 0,13 mbar Hg bei 130-142 °C, $n_D^{20}$ = 1,507 2. Ausb. 48,5 % d. Th. an 72,9 %igem Material.

Analog erhält man aus p-Fluorsulfonylbenzylchlorid und Trimethylphosphit den p-Fluorsulfonylbenzylphosphonsäuredimethylester vom $Kp_{0,13}$ = 138-148° ; die Ausbeute beträgt 61,8 % d. Th an 90,3 %igem Material.

Beispiel 3

507 g 3-Fluorsulfonylbenzylbromid und 498,5 g Triethylphosphit werden 7,5 Stunden in einem 180° warmen Ölbad gerührt. Das bei der Reaktion entstehende Ethylbromid wird in einer gekühlten Vorlage aufgefangen ; man erhält 170 g davon. Vom Kolbeninhalt wird dann das überschüssige Triethylphosphit im Wasserstrahlvakuum abdestilliert und der Rückstand an der Ölpumpe fraktioniert. $Kp_{0,13}$ = 148 °C ; Ausb. 506 g 3-Fluorsulfonylbenzylphosphonsäurediethylester. Das Material ist lt. GC 83,3 %ig, die Ausbeute beträgt also 67,9 % d. Th.

Folgende Umsetzungen werden analog durchgeführt :

o-Fluorsulfonylbenzylbromid → o-Fluorsulfonylbenzylphosphonsäurediethylester, $Kp_{0,33}$ = 153-162°. Ausb. 58,5 % d. Th. an 84,8 %igem Material.

4-Fluorsulfonyl-2-chlorbenzylbromid ($Kp_{0,13}$ = 103°) → 4-Fluorsulfonyl-2-chlorbenzylphosphonsäurediethylester, $Kp_{0,13}$ = 147-151°. Die Ausbeute an 94,6 %igem Material beträgt 51 % d. Th.

Beispiel 4

Eine Mischung aus 312,9 g o-Fluorsulfonylbenzylchlorid, 300 g Triethylphosphit und 600 ml Xylol wird 11 Stunden rückfließend gekocht. Dann destilliert man bei Normaldruck das Xylol, anschließend im Wasserstrahlvakuum das überschüssige Triethylphosphit ab und fraktioniert den Rückstand an der Ölpumpe. $Kp_{0,13}$ = 137-141°, $n_D^{20}$ = 1,495 6. Ausb. 49,6 % d. Th. an 92,7 %igem o-Fluorsulfonylbenzylphosphonsäurediethylester.

**Ansprüche**

1. Verfahren zur Herstellung von Verbindungen der Formel

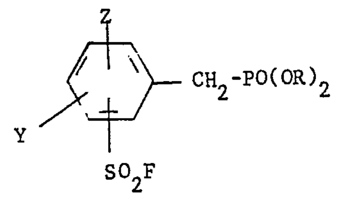

(I)

worin

Y Wasserstoff, Halogen, Nitro, $CF_3$, Alkyl, Cycloalkyl, Aralkyl, Aryl, Hetaryl, Acyl, Acylamino oder $SO_2F$,

Z Wasserstoff, Alkyl, Halogen oder — gemeinsam mit Y — einen annelierten carbo- oder heterocyclischen aromatischen Rest und

R Alkyl bedeuten,

dadurch gekennzeichnet, daß man Verbindungen der Formel

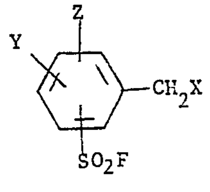

worin X für Halogen steht,
mit Phosphiten der Formel

$$P(OR)_3$$

umsetzt.

2. Verbindungen der Formel IV

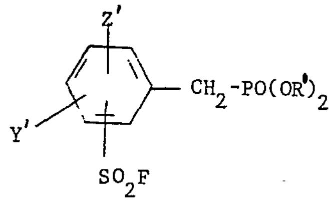

worin

Y' Wasserstoff, F, Cl, Br, $CF_3$, $CH_3$, tert.-Butyl, Acetylamino, Benzoylamino, Methylsulfonyl, Phenylsulfonyl, 1, 2, 4-Triazolyl-1 oder Pyrazolyl-1,

Z' Wasserstoff, Cl, $CH_3$ und

R' Methyl oder Ethyl bedeuten, wobei sich der Fluorsulfonylrest in o- oder m-Stellung zu dem Rest —$CH_2PO(OR)_2$ befindet.

**Claims**

1. Process for the preparation of compounds of the formula

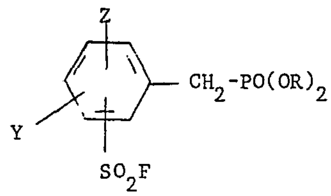

(I)

wherein

Y denotes hydrogen, halogen, nitro, $CF_3$, alkyl, cycloalkyl, aralkyl, aryl, hetaryl, acyl, acylamino or $SO_2F$,

Z denotes hydrogen, alkyl, halogen or — together with Y — a fused-on carbocyclic or heterocyclic aromatic radical and

R denotes alkyl,

characterised in that compounds of the formula

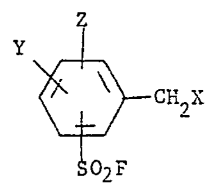

wherein X represents halogen,
are reacted with phosphites of the formula

$$P(OR)_3$$

2. Compounds of the formula

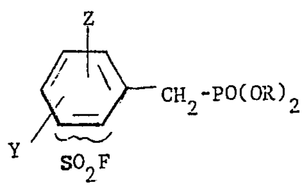

wherein

Y denotes hydrogen, F, Cl, Br, $CF_3$, $CH_3$, tert.-butyl, acetylamino, benzoylamino, methylsulphonyl, phenyl-sulphonyl, 1,2,4-triazol-1-yl or pyrazol-1-yl,

Z denotes hydrogen, Cl or $CH_3$ and

R denotes methyl or ethyl, the fluorosulphonyl radical being in the o or m position to the —$CH_2PO(OR)_2$ radical.

**Revendications**

1. Procédé pour préparer des composés de formule

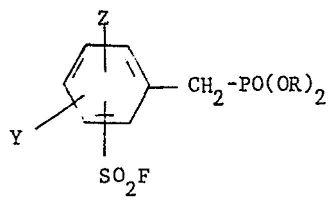

(I)

dans laquelle

Y représente un atome d'hydrogène ou d'halogène ou un groupe nitro, $CF_3$, alkyle, cycloalkyle, aralkyle, aryle, hétéro-aryle, acyle, acylamino ou $SO_2F$,

Z représente un atome d'hydrogène, un groupe alkyle ou un atome d'halogène ou, lorsqu'il est pris avec Y, un radical aromatique carbocyclique ou hétérocyclique condensé, et

R représente un groupe alkyle

procédé caractérisé en ce qu'on fait réagir des composés de formule

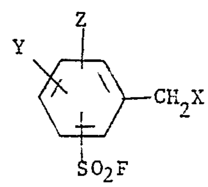

dans laquelle X représente un atome d'halogène, avec des phosphites de formule

$$P(OR)_3$$

2. Composés de formule

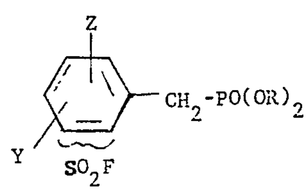

dans laquelle

Y représente un atome d'hydrogène, F, Cl, Br, $CF_3$, $CH_3$, un groupe tertiobutyle, acétylamino, benzoylamino, méthylsulfonyle, phénylsulfonyle, 1,2,4-triazolyle-1 ou pyrazolyle-1,

Z représente un atome d'hydrogène, Cl ou $CH_3$, et

R représente un groupe méthyle, éthyle, le radical fluorosulfonyle se trouvant en position ortho ou méta par rapport au radical —$CH_2PO(OR)_2$.